# EUROPÄISCHE PATENTSCHRIFT

(11) **EP 0 967 714 B1**
(45) Veröffentlichungstag und Bekanntmachung des Hinweises auf die Patenterteilung: **21.12.2005**
(21) Anmeldenummer: 99201903.4
(22) Anmeldetag: 15.06.1999
(51) Int. Cl.: H02M 3/28, H02M 7/48, H02M 3/335

(54) **Schaltnetzteil**
Switching power supply
Alimentation à découpage

(30) Priorität: 24.06.1998 DE 19828038
(43) Veröffentlichungstag der Anmeldung: 29.12.1999
(73) Patentinhaber: Philips Intellectual Property & Standards GmbH, 20099 Hamburg (DE); Koninklijke Philips Electronics N.V., 5621 BA Eindhoven (NL)
(72) Erfinder: Dürbaum, Thomas Dr.-Ing., 22335 Hamburg (DE)
(74) Vertreter: Volmer, Georg

(56) Entgegenhaltungen:
- EP-A- 0 336 725
- US-A- 5 029 062
- US-A- 5 747 351

## Beschreibung

Die Erfindung bezieht sich auf ein Schaltnetzteil mit einem Transformator mit einer Primärwicklung, zu der ein erstes Schaltelement in Reihe liegt, und einer Sekundärwicklung, zu der ein zweites Schaltelement in Reihe liegt, wobei sich im Betrieb des Schaltnetzteils erste Zeitabschnitte, in denen ein Primärstrom durch die Primärwicklung fließt, mit zweiten Zeitabschnitten, in denen ein Sekundärstrom durch die Sekundärwicklung fließt, abwechseln und wobei eine sekundärseitige Regelungseinheit zur Regelung der Ausgangsspannung oder des Ausgangsstroms des Schaltnetzteils durch Anpassung des Rückflusses eines Teils der vom Transformator in Richtung des Schaltnetzteilausgangs gelieferten Energiemenge in den zweiten Zeitabschnitten zurück in den Transformator vorgesehen ist.

Derartige Schaltnetzteile finden insbesondere zur AC-DC-Wandlung oder DC-DC-Wandlung im Bereich kleiner und mittlerer Leistungen (bis zu einigen wenigen hundert Watt) als bidirektionale Sperrwandler (flyback converter) Anwendung.

Unter anderem aus der US 3,986,097 (siehe beispielsweise Fig. 1) ist ein Schaltnetzteil bekannt, das als bidirektionaler Sperrwandler wirkt. Auch hier wechseln sich erste Zeitabschnitte, in denen ein Primärstrom durch die Primärwicklung eines Transformators fließt, mit zweiten Zeitabschnitten, in denen ein Sekundärstrom durch die Sekundärwicklung des Transformators fließt, ab. Der Primärstrom steigt in den ersten Zeitabschnitten linear von einem Minimalwert auf einen Maximalwert an. Der Sekundärstrom fällt in den zweiten Zeitabschnitten linear von einem Maximalwert auf einen Minimalwert ab. In Bereichen, wo der Primärstrom positiv ist, wird Energie von der Primärseite in den Transformator transportiert. Diese Energie wird dann am Beginn der zweiten Zeitabschnitte vom Transformator zur Sekundärseite in Richtung des Schaltnetzteilausgangs geliefert, wobei der Sekundärstrom positiv ist. Nachdem der Sekundärstrom den Wert Null erreicht hat, wird er negativ und fällt weiter bis zum Sekundärstromminimalwert ab. In diesem Bereich wird der Anteil der vom Transformator zur Sekundärseite gelieferten Energie, die nicht zur Versorgung der Last benötigt wird, zurück in den Transformator reflektiert. Durch Variation des Sekundärstromminimalwerts wird die von der Sekundärseite zurück zum Transformator reflektierte Energie eingestellt. Durch den Wert des jeweiligen Sekundärstromminimalwerts wird der Primärstromminimalwert des folgenden ersten Zeitabschnitts entsprechend dem Übersetzungsverhältnis des Transformators mitbestimmt. Der Primärstromminimalwert bestimmt nun wiederum den Bereich, in dem der Primärstrom negativ ist und damit die Energiemenge, die in dem jeweiligen ersten Zeitabschnitt vom Transformator zurück in Richtung des Schaltnetzteileingangs gegeben wird.

In der EP 0 336 725 B1 ist nun ein Schaltnetzteil beschrieben, bei dem in Reihe zur Primärwicklung ein erstes Schaltelement liegt, das von einer Kontrollschaltung gesteuert wird. Die Kontrollschaltung wertet eine an einer primärseitigen Hilfswicklung des Transformators abfallende Hilfsspannung aus. Das erste Schaltelement wird von der Kontrollschaltung so gesteuert, daß die Länge der Zeitabschnitte, in denen das erste Schaltelement eingeschaltet, d.h. im geschlossenen und damit leitenden Zustand ist, einen festen Wert aufweist. Die Kontrollschaltung schaltet das primärseitige Schaltelement ein, d.h. bringt es in den geschlossenen und damit leitenden Zustand, sobald die Spannung an der Hilfswicklung positiv wird. Die Kontrollschaltung steuert das Schaltelement so, daß die Länge der Zeitabschnitte, in denen das erste Schaltelement eingeschaltet ist, einen festen Wert aufweist. Das erste Schaltelement weist damit eine konstante Einschaltdauer auf. In Reihe zur Sekundärwicklung des Transformators liegt ein zweites Schaltelement, das von einer Regelungseinheit gesteuert wird. Diese detektiert die Ausgangsspannung des Schaltnetzteils, vergleicht die detektierte Spannung mit einer internen Referenzspannung und regelt auf diese Weise in Abhängigkeit von dem vorgebbaren Wert der Referenzspannung die Länge der Zeitabschnitte, in denen das zweite Schaltelement eingeschaltet ist, und entsprechend die Menge an von der Sekundärseite zum Transformator und zur Primärseite zurückreflektierter Energie. Mit steigender Last am Ausgang des Schaltnetzteils wird dabei die Menge an zurückreflektierter Energie reduziert. Bei kleiner werdender Last erhöht sich die Menge an zurückreflektierter Energie. Die Regelungseinheit regelt auf diese Weise die Ausgangsspannung des Schaltnetzteils auf einen konstanten Wert. Bei dem Schaltnetzteil erübrigt sich die Übertragung eines die Abweichung der Ausgangsspannung von einem Sollwert beschreibenden Kontrollsignals zur Primärseite über einen Pfad mit galvanischer Entkopplung, z. B. mittels eines Optokopplers. Andererseits ist nur in den Bereichen mit galvanischer Entkopplung, z. B. mittels eines Optokopplers. Andererseits ist nur in den Bereichen mit negativem Primärstrom ein spannungsloses Einschalten ("zero voltage switching") des primärseitigen Schaltelements möglich, da dann die parallel zum Schaltelement liegende Diode leitet. Bei größeren Ausgangsleistungen werden die Bereiche, in denen der Primärstrom negativ ist, reduziert und die Bereiche, in denen ein positiver Primärstrom fließt, entsprechend verlängert. Dies kann gerade bei großen Ausgangsleistungen, wo das erste Schaltelement die größten Ohmschen Verluste aufweist, dazu führen, das in ersten Zeitabschnitten kein negativer Primärstrom mehr fließt und dementsprechend kein spannungsloses Einschalten des ersten Schaltelements mehr sichergestellt ist.

Aus US 5,029,062 ist eine Schaltung zur Regulierung eines elektrischen Parameters bekannt, welcher durch Übertragung von Elektrizität zwischen zwei Netzwerken gesteuert werden soll, wobei die Schaltung eine bi-direktionale Stromschaltung mit einer elektrischen Isolierung der beiden Netzwerke ist. Die Schaltung ist insbesondere zur Trennung von Anwendungen geeignet. Die Schaltung ermöglicht eine Übertragung elektrischer Energie in beiden Richtungen zwischen zwei elektrischen Netzwerken, wobei die beiden Netzwerke elektrisch isoliert voneinander bleiben.

Der Erfindung liegt die Aufgabe zugrunde, eine weitere Schaltnetzteilvariante zu schaffen, bei der ebenfalls keine Übertragung eines Kontrollsignals von der Sekundärseite zur Primärseite mit galvanischer Entkopplung erforderlich und bei der ein spannungsloses Einschalten des ersten Schaltelements sichergestellt ist und bei dem unabhängig von der Ausgangslast die zurück reflektierte Leistung möglichst gering gehalten wird.

Die Aufgabe wird dadurch gelöst, daß eine primärseitige Regelungseinheit vorgesehen ist, die zur Regelung der vom Transformator in den ersten Zeitabschnitten jeweils in Richtung des Schaltnetzteileingangs abgegebenen Energie auf einen vorgebbaren Wert dient, wobei als der Regelung durch die primärseitige Regelungseinheit zugrundeliegende Sollgröße ein vorgebbarer Zeitraum zwischen dem Beginn der ersten Zeitabschnitte und dem jeweils nächsten folgenden Nulldurchgang des Primärstroms vorgesehen ist.

Die jeweilige Energiemenge, die in den ersten Zeitabschnitten zurück zur Primärseite fließt, wird nun unabhängig von der Ausgangsleistung auf einen vorgebbaren Wert geregelt. Auch bei großen Ausgangsleistungen ist sichergestellt, daß die Bereiche innerhalb der ersten Zeitabschnitte, in denen ein spannungslosen Einschalten der ersten Schaltmittel möglich ist, ausreichend lang sind. Ein spannungsloses Einschalten der ersten Schaltmittel ist somit auch bei maximaler Ausgangsleistung sichergestellt. Durch das Reflektieren von Energie von der Sekundärseite zurück zum Transformator und einem entsprechenden Energiefluß vom Transformator in Richtung des Schaltnetzteileingangs erübrigt sich außerdem die Übertragung eines Kontrollsignals von der Sekundärseite zur Primärseite über einen Pfad mit galvanischer Entkopplung, denn die Regelung der Ausgangsspannung/des Ausgangsstroms erfolgt durch die sekundärseitige Regelungsschaltung.

Eine Abweichung der zu regelnden Ausgangsspannung (oder alternativ des zu regelnden Ausgangsstroms) von einem Sollwert im Falle von Lastwechseln beeinflußt den Wert der reflektierten Energie und somit den Primärstromminimalwert zu Beginn der nächsten ersten Zeitabschnitte. Da die primärseitige Regelung aber versucht, gerade diesen Wert mit einem vorgebbaren festen Wert in Übereinstimmung zu halten, steuert die Regelung das primärseitige Schaltelement so, daß der Abweichung entgegengewirkt wird. Ist in einem Schaltzyklus reflektiert worden, so wird im nächsten Schaltzyklus weniger Energie von der Primärseite zur Sekundärseite transportiert.

Die vorgeschlagene Einstellung der in den ersten Zeitabschnitten vom Transformator in Richtung des Schaltnetzteileingangs abgegebenen Energiemenge ist insbesondere für integrierte Schaltungen interessant, in denen Zeitdauern leicht mit Hilfe von Taktsignalen verarbeitbar sind.

Für die Einstellung der in den ersten Zeitabschnitten vom Transformator in Richtung des Schaltnetzteileingangs abgegebenen Energiemenge wird außerdem vorgeschlagen, dass als der Regelung durch die primärseitige Regelungseinheit zugrundeliegende Sollgröße ein vorgebbarer jeweils zu Beginn der ersten Zeitabschnitte vorliegender Primärstromwert vorgesehen werden kann. Als Sollgröße kann beispielsweise eine leicht zu generierende Referenzspannung dienen, die mit einer zum detektierten Primärstrom proportionalen Spannung verglichen wird.

Für die Anpassung der Ausschaltzeitpunkte des ersten Schaltelements mittels der primärseitigen Regelungseinheit wird einerseits vorgeschlagen, dies durch Anpassung eines von der Ausgangsleistung des Schaltnetzteils abhängigen Primärstromwerts am Ende der ersten Zeitabschnitte zu realisieren. Dies läßt sich leicht dadurch realisieren, daß eine der Differenz zwischen dem detektierten Primärstrom zu Beginn der ersten Zeitabschnitte und dem Primärstromsollwert für diese Zeitpunkte entsprechende Vergleichsspannung mit einer zum detektierten Primärstrom proportionalen Spannung verglichen wird. Ein Ausschalten des ersten Schaltelements erfolgt, wenn die zum detektierten Primärstrom proportionale Spannung den Wert der Vergleichsspannung erreicht. Eine andere Möglichkeit sieht vor, daß die primärseitige Regelungseinheit zur Anpassung der Ausschaltzeitpunkte des ersten ... Schaltelements durch Anpassung der von der Ausgangsleistung des Schaltnetzteils abhängigen Länge der ersten Zeitabschnitte vorgesehen ist. Diese Ausgestaltung ist wiederum insbesondere wegen der guten Verarbeitbarkeit von Zeitdauern mit Hilfe von Taktsignalen für Realisierungen mit Hilfe von integrierten Schaltungen vorteilhaft.

In einer anderen Ausgestaltung wird vorgeschlagen, daß die sekundärseitige Regelungseinheit Mittel zur Bildung eines ersten Vergleichswertes aus der Differenz zwischen der Ausgangsspannung/dem Ausgangsstrom des Schaltnetzteils und einer Sollgröße für die Ausgangsspannung/den Ausgangsstrom aufweist und daß Mittel zur Bildung eines aus dem Wert des Sekundärstroms abgeleiteten zweiten Vergleichswertes vorgesehen sind und daß ein Ausschalten des zweiten Schaltelements vorgesehen ist, wenn der zweite Vergleichswert den Wert des ersten Vergleichswertes erreicht. Eine Alternative zur Festlegung der Ausschaltzeitpunkte des zweiten Schaltelements durch die sekundärseitige Regelungseinheit beinhaltet, daß Mittel zur Bildung eines aus der seit dem Nulldurchgang des Sekundärstroms vergangenen Zeit innerhalb eines zweiten Zeitabschnitts abgeleiteten zweiten Vergleichswertes vorgesehen sind, was wiederum in integrierten Schaltungen leicht umzusetzen ist.

Die Erfindung bezieht sich auch auf eine Schaltungsanordnung, insbesondere einen integrierten Schaltkreis, mit der primärseitigen Regelungseinheit und/oder der sekundärseitigen Regelungseinheit für das oben beschriebene Schaltnetzteil.

Ausführungsbeispiele der Erfindung werden im folgenden anhand der Figuren näher erläutert. Es zeigen:
- Fig. 1: ein erfindungsgemäßes Schaltnetzteil,
- Fig. 2: Zeitabläufe für den Primär- und Sekundärstrom und für die Steuersignale der beiden Schalter auf der Primär- und Sekundärseite,
- Fig. 3: ein Blockschaltbild für eine primärseitige Regelungseinheit,
- Fig. 4: ein Blockschaltbild für eine sekundärseitige Regelungseinheit,
- Fig. 5: ein Blockschaltbild für eine weitere Ausführungsform der primärseitigen Regelungseinheit und
- Fig. 6: ein Blockschaltbild für eine weitere Ausführungsform der sekundärseitigen Regelungseinheit.

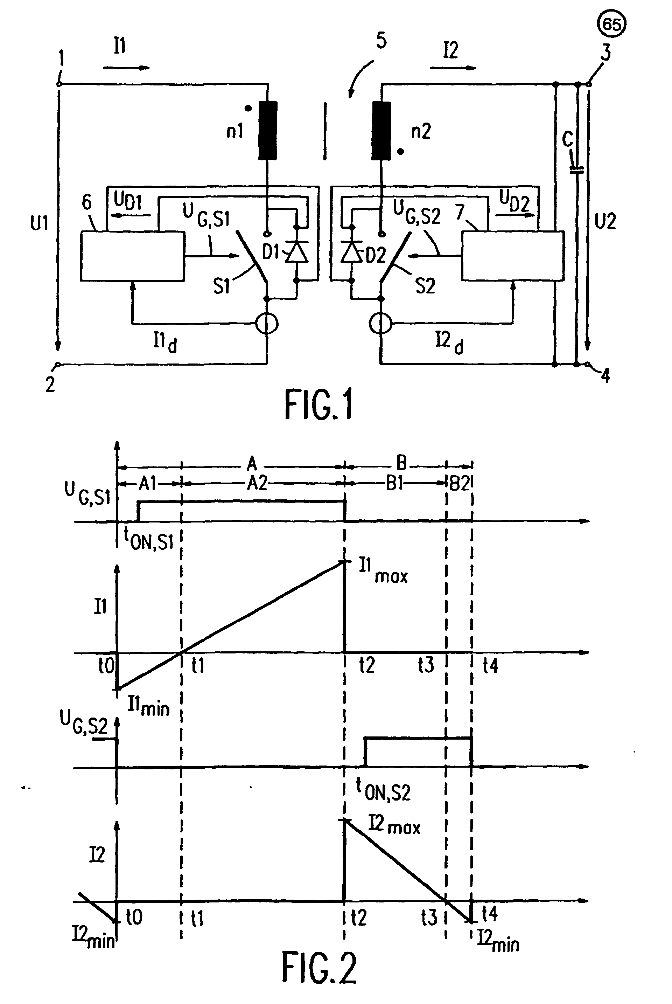

Das in Fig. 1 gezeigte Schaltnetzteil vom Typ eines bidirektionalen Sperrwandlers weist an seinem Eingang zwei Eingangsanschlüsse 1 und 2 auf, zwischen denen eine Eingangsspannung U1 angelegt wird. Der auf positiverem Potential als der Eingangsanschluß 2 liegende Eingangsanschluß 1 ist mit der Primärwicklung eines Transformators 5 verbunden, die n 1 Windungen aufweist. Der andere Anschluß der Primärwicklung ist mit einem Schaltelement S1 verbunden, zu dem parallel eine Diode D1 geschaltet ist. Das Schaltelement S1 ist beispielsweise ein MOS-Feldeffekttransistor. In diesem Fall kann als Diode D1 die sogenannte body-Diode des Feldeffekttransistors verwendet werden. Die Kathode der Diode D1 ist mit der Primärwicklung des Transformators 5 verbunden, die Anode der Diode D1 ist mit dem Eingangsanschluß 2 verbunden, so daß die Parallelschaltung aus dem Schaltelement S1 und der Diode D1 zwischen der Primärwicklung des Transformators 5 und dem Eingangsanschluß 2 liegt. Die Schaltzustände des Schaltelements S1 werden durch die Regelungseinheit 6 durch Zuführung eines Steuersignals U_{G,S1} bestimmt. Für den Fall, daß das Schaltelement S1 als MOS-Feldeffekttransistor ausgebildet ist, entspricht dem Steuersignal U_{G,S1} die Gate-Spannung des Feldeffekttransistors. Zur Einstellung der Schaltzustände des Schaltelementes S1 detektiert die Regelungseinheit 6 einerseits den Primärstrom I1 mit Hilfe einer nicht näher gezeigten Strommeßvorrichtung, welche ein Primärstromdetektorsignal I1_{d} an die Regelungseinheit 6 liefert. Weiterhin wird die an der Diode D1 anliegende Spannung U_{D1}, die in Sperrichtung an der Diode D1 abfällt, abgegriffen und der Regelungseinheit 6 zugeführt.

Am Ausgang des Schaltnetzteils liegt eine Ausgangsspannung U2 zwischen zwei Ausgangsanschlüssen 3 und 4 an. Der gegenüber dem Ausgangsanschluß 4 auf positiverem Potential liegende Ausgangsanschluß 3 ist mit der n2 Windungen aufweisenden Sekundärwicklung des Transformators 5 verbunden. Der andere Anschluß der Sekundärwicklung ist mit einem Schaltelement S2 verbunden, zu der parallel eine Diode D2 liegt. Die Kathode der Diode D2 ist mit der Sekundärwicklung und die Anode der Diode D2 ist mit dem Ausgangsanschluß 4 verbunden. Die Parallelschaltung aus der Diode D2 und dem Schaltelement S2 liegt damit zwischen der Sekundärwicklung des Transformators 5 und dem Ausgangsanschluß 4. Das Schaltelement S2 und die Diode D2 sind vorzugsweise (wie auf der Primärseite das Schaltelement S1 und die Diode D1) als MOS-Feldeffekttransistor und dessen body-Diode ausgeführt. Eine sekundärseitige Regelungseinheit 7 steuert das Schaltelement S2 mit Hilfe eines Steuersignals U_{G,S2}, das bei der Ausführung des Schaltelements S2 als MOS-Feldeffekttransistor die diesem zugeführte Gate-Spannung ist. Auch auf der Sekundärseite des Schaltnetzteils ist eine Strommeßvorrichtung vorgesehen, die hier den Sekundärstrom 12 mißt und daraus ein Sekundärstromdetektorsignal I2_{d} ableitet, das der Regelungseinheit 7 zugeführt wird. Weiterhin wird an der Diode D2 die in Sperrichtung abfallende Spannung U_{D2} abgegriffen und der Regelungseinheit 7 zugeführt. Darüber hinaus wird für den Fall, daß die Ausgangsspannung U2 auf einen konstanten Wert geregelt werden soll, diese Spannung ebenfalls der Regelungseinheit 7 zugeführt. Alternativ oder zusätzlich insbesondere bei Ladegeräten kann auch die Regelung des am Ausgang des Schaltnetzteils gelieferten Ausgangsstroms auf einen konstanten Wert vorgesehen werden, wobei dann der Regelungseinheit 7 anstelle der Ausgangsspannung U2 ein Detektorsignal für den Ausgangsstrom zugeführt wird, was in Fig. 1 aber nicht dargestellt ist. Weiterhin ist ein Glättungskondensator C vorgesehen, dessen Anschlüsse mit den Ausgangsanschlüssen 3 und 4 verbunden sind und der damit parallel zum Ausgang des Schaltnetzteils liegt. Regelmäßig ist in tatsächlichen Ausführungsformen anstelle des Glättungskondensators C ein komplizierteres Ausgangsfilter anzusetzen, was für die Erfindung aber unwesentlich ist.

Mit Hilfe von Fig. 2 soll nun das dem in Fig. 1 dargestellten Schaltnetzteil zugrundeliegende Regelungsprinzip verdeutlicht werden. Fig. 2 zeigt die Zeitverläufe des dem Schaltelement S1 zugeführten Steuersignals U_{G,S1}, des Primärstroms I1, des zur Steuerung des Schaltelements S2 dienenden Steuersignals U_{G,S2} und des Sekundärstroms 12. Die Steuersignale U_{G,S1} und U_{G,S2} stellen im vorliegenden Ausführungsbeispiel Gate-Spannungen für die als MOS-Feldeffekttransistoren ausgeführten Schaltelemente S1 und S2 dar. Für den Fall, daß die Gate-Spannung U_{G,S1} den Wert 0 aufweist, ist das Schaltelement S 1 ausgeschaltet, d.h. geöffnet und sperrend. Falls diese Spannung einen bestimmten positiven Wert annimmt, ist das Schaltelement S1 eingeschaltet, d.h. geschlossen und leitend. Entsprechendes gilt für die Gate-Spannung U_{G,S2} und das Schaltelement S2.

Kurz vor einem Zeitpunkt t0 ist das Schaltelement S1 ausgeschaltet und das Schaltelement S2 eingeschaltet. Dementsprechend fließt kein Primärstrom I1, der Sekundärstrom I2 ist negativ und fällt linear ab. Zum Zeitpunkt t0 wird nun das Schaltelement S2 ausgeschaltet, was dazu führt, daß der Sekundärstrom I2 schlagartig auf 0 abfällt. Die aufgrund des Flusses eines negativen Sekundärstroms im Transformator gespeicherte Energie sorgt nun dafür, daß ein negativer Primärstrom I1 fließt. Dieser steigt zwischen den Zeitpunkten t0 und t2 linear an und beginnt zum Zeitpunkt t0 bei einem Minimalwert I1ₘᵢₙ, der umgekehrt proportional zum Verhältnis der Windungszahlen n1/n2 und proportional zum Minimalwert I2ₘᵢₙ des Sekundärstroms, auf den der Sekundärstrom bis zum Zeitpunkt t0 abgefallen ist, ist. Beim Fließen eines negativen Primärstroms I1 wird zwischen den Zeitpunkten t0 und t1 die im Transformator gespeicherte Energie in Richtung des Eingangs des Schaltnetzteils transportiert. Dabei ist die Diode D1 im leitenden Zustand, so daß während des Zeitraums zwischen den Zeitpunkten t0 und t1 ein spannungsloses Einschalten des Schaltelements S1 erfolgen kann. In Fig. 2 ist beispielhaft ein Einschaltzeitpunkt t_{ON,S1} eingezeichnet: Der Zeitpunkt t_{ON,S1} wird insbesondere möglichst nah an den Zeitpunkt t₀ gelegt, um die Ohmschen Verluste herabzusetzen, denn der Widerstand des geschlossenen Schaltelements S 1 ist geringer als der Widerstand der Diode D1 in Durchlaßrichtung. Beim Zeitpunkt t1 liegt der Nulldurchgang des linear ansteigenden Primärstromes I1, der danach bis zum Zeitpunkt t2 auf seinen Maximalwert I1ₘₐₓ ansteigt. Während der Zeitspanne zwischen den Zeitpunkten t1 und t2 wird von der Primärseite her in den Transformator 5 Energie transportiert und gespeichert.

Zum Zeitpunkt t2 wird nun das Schaltelement S1 ausgeschaltet, so daß der Primärstrom I1 schlagartig auf Null abfällt. Durch die bis zum Zeitpunkt t2 durch den positiven Strom I1 im Transformator 5 gespeicherte Energie wird nun bewirkt, daß ab dem Zeitpunkt t2 ein Sekundärstrom 12 fließt. Dieser beginnt bei seinem Maximalwert I2ₘₐₓ und fällt ausgehend von diesem linear ab. Der Maximalwert I2ₘₐₓ ist proportional zum Übersetzungsverhältnis n1/n2 des Transformators 5 und dem Primärstrom-Maximalwert I1ₘₐₓ. Während nun ein positiver Sekundärstrom I2 fließt, ist die Diode D2 im leitenden Zustand. Ein spannungsloses Einschalten des Schaltelements S2 kann somit ab dem Zeitpunkt t2 bis zum Zeitpunkt t3, wo der Nulldurchgang des Sekundärstroms I2 liegt und ab dem dieser negativ wird, erfolgen. Beispielhaft ist ein Einschaltzeitpunkt t_{ON,S2} für das Schaltelement S2 eingezeichnet. Zwischen den Zeitpunkten t2 und t3 wird die im Transformator zwischen den Zeitpunkten t1 und t2 gespeicherte Energie in Richtung des Ausgangs des Schaltnetzteils zur Versorgung einer Last transportiert. Zum Zeitpunkt t3 hat der Transformator 5 seine gesamte in ihm gespeicherte Energie abgegeben. Die am Glättungskondensator C abfallende Spannung bewirkt aber nun ab dem Zeitpunkt t3, daß der Sekundärstrom I2 über das inzwischen eingeschaltete Schaltelement S2 weiterfließt. Der Stromfluß des Sekundärstroms I2 setzt sich im Zeitpunkt t3 stetig und mit derselben Steigung im negativen Bereich fort. Der Sekundärstrom I2 fällt dabei bis zum Zeitpunkt t4 bis zu seinem Minimalwert I2ₘᵢₙ ab. Zum Zeitpunkt t4 wird das Schaltelement S2 ausgeschaltet.

Ab dem Zeitpunkt t4 wiederholen sich nun im eingeschwungenen Zustand des Schaltnetzteils die Zeitverläufe, wie sie für den Bereich zwischen t0 und t4 dargestellt und beschrieben worden sind. Die Zeitdauer zwischen den Zeitpunkten t0 und t4 entspricht somit der Schaltperiode des Schaltnetzteils. Eine Schaltperiode läßt sich somit in erste Zeitabschnitte A und zweite Zeitabschnitte B unterteilen. Die ersten Zeitabschnitte A weisen jeweils einen Bereich A1, in dem ein negativer Primärstrom fließt, und einen Bereich A2, in dem der Primärstrom positiv ist, auf. Die zweiten Zeitabschnitte B enthalten jeweils einen Bereich B1, wo der Sekundärstrom positiv ist, und einen Bereich B2, wo der Sekundärstrom negativ ist.

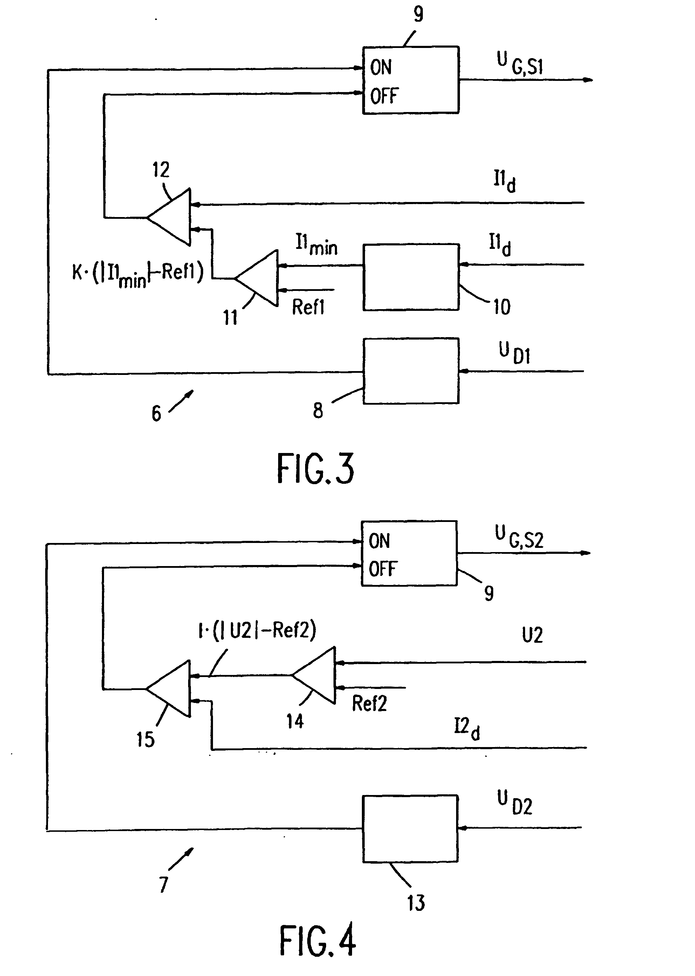

Fig. 3 zeigt ein Blockschaltbild für die primärseitige Regelungseinheit 6. Ein Funktionsblock 8 beschreibt die Schaltungseinheiten, die zur Verarbeitung der von der Regelungseinheit 6 detektierten Spannung U_{D1} an der Diode D1 dient. Falls die Funktionseinheit 8 den leitenden Zustand der Diode D1 detektiert, generiert sie innerhalb einer vorgebbaren Sicherheitszeitspanne - wie hier der Differenz zwischen t0 und t_{ON,S1} - ein Signal, das einem ON-Eingang einer Treiberschaltung 9 zugeführt wird. Dies bewirkt, daß die Treiberschaltung 9 mittels des Steuersignals U_{G,S1} ein Einschalten des Schaltelements S1 bewirkt. Alternativ zur Auswertung der an der Diode abfallenden Spannung U_{D1} kann auch der detektierte Strom I1 zur Detektion des Zustandes der Diode D1 verwendet werden.

Ein Funktionsblock 10 dient zur Auswertung des den Primärstrom I1 beschreibenden Detektorsignals I1_{d}. Mit Hilfe des Funktionsblockes 10 wird das jeweilige Minimum I1ₘᵢₙ des Primärstroms I1 für die einzelnen Schaltperioden bestimmt. Dieser Wert wird mit Hilfe einer Fehlerverstärkerschaltung 11 mit einem Referenzwert Ref1 verglichen. Der Referenzwert Ref1 stellt den gewünschten vorgebbaren Referenzwert für den Minimalwert I1ₘᵢₙ des Primärstroms I1 dar. Die Fehlerverstärkerschaltung 11 liefert ein zur Differenz zwischen dem vom Funktionsblock 10 ermittelten tatsächlichen Wert I1ₘᵢₙ und dem Referenzwert Ref1 proportionales Signal k • (|I1ₘᵢₙ| - Ref1), wobei k eine von dem Aufbau der Fehlerverstärkerschaltung 11 abhängige Konstante ist. In diesem Fall ist die Fehlerverstärkerschaltung 11 als Proportionalreglerschaltung ausgelegt. Gegebenenfalls können auch andere Reglertypen in der Fehlerverstärkerschaltung 11 umgesetzt werden.

Der von der Fehlerverstärkerschaltung 11 an ihrem Ausgang gelieferte Wert wird nun mit dem den aktuellen Primärstrom I1 beschreibenden Detektorsignal I1_{d} mittels einer Komparatorschaltung 12 verglichen. Falls der Wert von I1_{d} den Wert k • (|I1ₘᵢₙ| - Ref1) erreicht, wird von der Komparatorschaltung 12 ein Signal zum Off-Eingang der Treiberschaltung 9 gegeben, das die Treiberschaltung 9 dazu veranlaßt, an den Steuereingang des Schaltelementes S1 ein Ausschaltsignal U_{G,S1} anzulegen.

In Fig. 4 ist ein Blockschaltbild zur Erläuterung der sekundärseitigen Regelungseinheit 7 dargestellt. Ein Funktionsblock 13 dient zur Auswertung der an der Diode D2 abfallenden Spannung U_{D2}. Falls die Funktionseinheit 13 den leitenden Zustand der Diode D2 detektiert, veranlaßt sie entsprechend der Funktion der Funktionseinheit 8 der primärseitigen Regelungseinheit 6 ein Einschalten des Schaltelementes S2 durch Anlegen eines entsprechenden Steuersignals U_{G,S2} mittels einer Treiberschaltung 9 (vom gleichen Typ wie die in Fig. 3 gezeigte Treiberschaltung) . Der Einschaltzeitpunkt des Schaltelementes S2 wird mit t_{ON,S2} bezeichnet und liegt mit einem vorgebbaren zeitlichen Sicherheitsabstand nach dem Zeitpunkt des Ausschaltens des Schaltelementes S1 (Zeitpunkt t2). Fig. 2 zeigt dies beispielhaft. Insbesondere wird der Zeitpunkt t_{ON,S2} möglichst nah an den Zeitpunkt t2 gelegt, um die Ohmschen Verluste möglichst gering zu halten, denn der Widerstand des Schaltelements S2 im geschlossenen Zustand ist geringer als der Durchlaßwiderstand der Diode D2. Alternativ kann auch der detektierte Strom I2 zur Detektion des Zustandes der Diode D2 verwendet werden, so daß sich die Messung der Spannung U_{D2} dann erübrigt.

Für das Ausschalten des Schaltelementes S2 (Zeitpunkt t4) wird einerseits die Ausgangsspannung U2 (und/oder als zusätzliche nicht dargestellte Ausgestaltung der Ausgangsstrom) und andererseits der Sekundärstrom I2 detektiert und verarbeitet. Die detektierte Ausgangsspannung U2 wird mit einem die Sollgröße für die Ausgangsspannung U2 darstellenden Referenzwert Ref2 mittels einer als Proportionalreglerschaltung wirkenden Fehlerverstärkerschaltung 14 verglichen, die an ihrem Ausgang einen zur Differenz aus dem Betrag der Ausgangsspannung U2 und dem Referenzwert Ref2 proportionalen ersten Vergleichswert 1 • (|U2| - Ref2) liefert. Die Fehlerverstärkerschaltung 14 kann gegebenenfalls auch durch andere Reglertypen realisiert werden. Der von der Fehlerverstärkerschaltung 14 gelieferte Wert wird mit den aktuellen Werten des den Sekundärstrom I2 beschreibenden Sekundärstromdetektorsignals I2_{d} (zweiter Vergleichswert) verglichen. Wenn der Wert von I2_{d} den Wert des von der Fehlerverstärkerschaltung 14 gelieferten Signals erreicht, generiert eine diese Differenz auswertende Komparatorschaltung 15 ein Signal zum Off-Eingang der Treiberschaltung 9, was zur Folge hat, daß die Treiberschaltung mittels des Steuersignals U_{G,S2} ein Ausschalten des Schaltelementes S2 bewirkt.

Bei einer Vergrößerung der am Ausgang des Schaltnetzteils anliegenden Last setzt folgender Regelungsmechanismus ein, um die Ausgangsspannung U2 konstant zu halten. Zunächst wird aufgrund des erhöhten Energieverbrauchs am Ausgang der Last die in einer Schaltperiode von der Sekundärseite zum Transformator zurückreflektierte Energie reduziert werden, was bei der durch Fig. 4 dargestellten Regelungseinheit 7 dazu führt, daß der Sekundärstrom 12 auf einen betragsmäßig geringeren Wert I2ₘᵢₙ abfällt. Dies wird dadurch erreicht, daß der Ausschaltzeitpunkt des Schaltelementes S2 in Richtung auf den vorhergehenden Nulldurchgang des Sekundärstroms I2 vorverlegt wird. Der Wert, um den der Ausschaltzeitpunkt des Schaltelementes S2 vorverlegt wird, hängt neben der Größe der Laständerung auch von der Auslegung der Regelung bzw. der Realisierung der Fehlerverstärkerschaltung 14 ab. Aufgrund der betragsmäßigen Verkleinerung des Minimalwertes I2ₘᵢₙ des Sekundärstromes I2 ist auch in der nächsten Schaltperiode der Minimalwert I1ₘᵢₙ des Primärstromes I1 entsprechend betragsmäßig reduziert. Dies führt dazu, daß in dieser Schaltperiode die in Richtung des Schaltnetzteileingangs zwischen dem Beginn der Schaltperiode (t0) und dem Nulldurchgang des Primärstromes (t1) abgegebene Energie reduziert ist. Mittels der primärseitigen Regelungseinheit 6 wird die betragsmäßige Verringerung des Minimalwerts I1ₘᵢₙ des Primärstromes I1 in dieser Schaltperiode ausgewertet und der Ausschaltzeitpunkt des Schaltelementes S 1 so verlegt, daß die Zeitdauer zwischen dem vorhergehenden Nulldurchgang des Primärstromes I1 und dem Ausschaltzeitpunkt des Schaltelementes S1 vergrößert ist. Da zwischen diesen Zeitpunkten Energie von der Primärseite in den Transformator fließt und dort gespeichert wird, wird entsprechend der Laständerung am Ausgang des Schaltnetzteils in Abhängigkeit von der Auslegung der Regelung bzw. der Fehlerverstärkerschaltung 11 eine Vergrößerung des Energieflusses von der die Eingangsspannung U1 liefernden Spannungsquelle bewirkt. Dies hat zur Folge, daß der Maximalwert I1ₘₐₓ betragsmäßig ansteigt, was wiederum mit einem betragsmäßigen Ansteigen des Maximalwertes I2ₘₐₓ des Sekundärstromes verbunden ist. Dies wiederum hat einen vergrößerten Energiefluß vom Transformator in Richtung des Schaltnetzteilausgangs zur Folge, wodurch eine Anpassung des Schaltnetzteils an die Lastvergrößerung erreicht wird.

In mehreren Schaltperioden wirken die beiden Regelungseinheiten 6 und 7 nun so zusammen, daß im eingeschwungenen Zustand des Schaltnetzteils die in Richtung des Schaltnetzteileingangs abgegebene Energie zwischen den Zeitpunkten t0 und t1 auf einen vorgebbaren Wert geregelt wird, was einem bestimmten Wert I1ₘᵢₙ bzw. einer bestimmten Zeitspanne zwischen dem Minimalwert I1ₘᵢₙ und des folgenden Nulldurchgangs (Zeitspanne zwischen t0 und t1) entspricht. Hierdurch wird sichergestellt, daß auch bei maximaler Ausgangslast ein spannungsloses Einschalten des ersten Schaltelementes S1 sichergestellt ist.

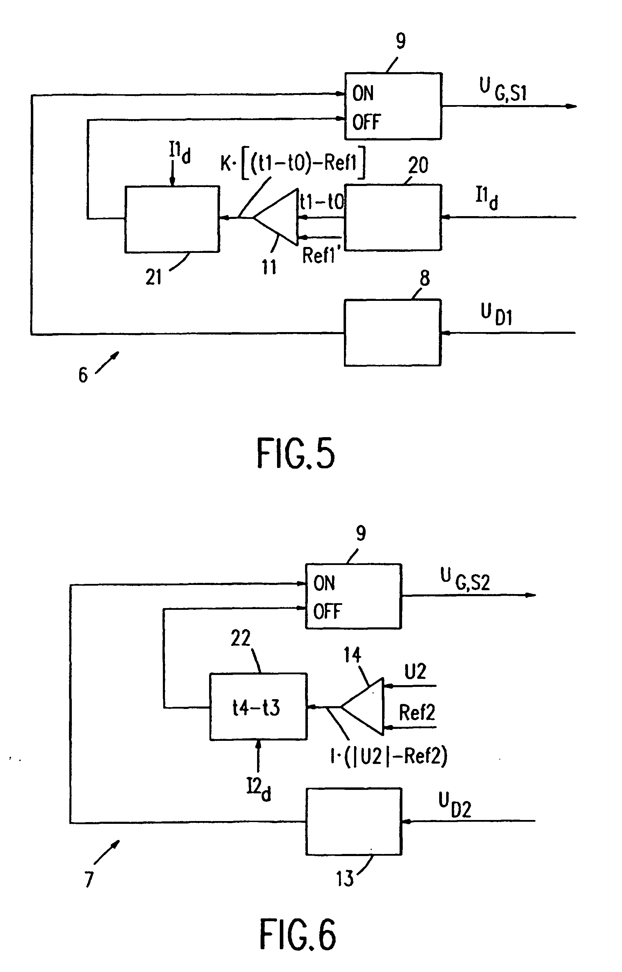

Fig. 5 zeigt eine andere Ausführungsform der primärseitigen Regelungseinheit 6. Sie enthält zwei Möglichkeiten der Abwandlung. Einerseits wird durch die Regelungseinheit 6 nicht mehr der Minimalwert I1ₘᵢₙ des Primärstromes I1, sondern mittels der Funktionseinheit 20 der Zeitpunkt zwischen dem Auftreten des Minimalwerts I1ₘᵢₙ und dem darauffolgenden Nulldurchgang des Primärstromes I1 (hier die Differenz t1 - t0) ermittelt, die wiederum mit einem modifizierten Referenzwert Ref1' mittels der Fehlerverstärkerschaltung 11 verarbeitet wird. Andererseits wird auch der von der Fehlerverstärkerschaltung 11 gelieferte Wert nunmehr durch eine Funktionseinheit 21 ausgewertet, die den folgenden Ausschaltzeitpunkt nicht danach bestimmt, wann der Primärstrom einen bestimmten Maximalwert I1ₘₐₓ erreicht, sondern sie bestimmt den Ausschaltzeitpunkt t2 insoweit, als eine bestimmte Zeitspanne t2 - t1 zwischen dem Nulldurchgang des Primärstroms I1 und dem Einschaltzeitpunkt t2 des Schaltelementes 1 liegt. Beide Ausgestaltungsmöglichkeiten der Regelungseinheit 6 können auch einzeln verwendet werden. Die Regelung anhand von Zeitspannen ist insbesondere in integrierten taktgesteuerten Schaltungen vorteilhaft und leicht umsetzbar.

Fig. 6 zeigt eine Ausgestaltung der sekundärseitigen Regelungseinheit 7. Hier ist anstelle der Komparatorschaltung 15 eine Funktionseinheit 22 zur Anwendung gekommen, die den jeweiligen Ausschaltzeitpunkt t4 des Schaltelementes S2 so bestimmt, daß in Abhängigkeit vom Ausgangssignal (erster Vergleichswert) der Fehlerverstärkerschaltung 14 eine bestimmte Zeitspanne (zweiter Vergleichswert) zwischen dem Nulldurchgang des Sekundärstroms 12 und dem Ausschaltzeitpunkt des Schaltelementes S2 in der jeweiligen Schaltperiode vorgegeben wird. Diese Ausführungsform läßt sich wiederum insbesondere in integrierten Schaltungen leicht umsetzen.

Sowohl die primärseitige Regelungseinheit 6 als auch die sekundärseitige Regelungseinheit 7 werden vorzugsweise mittels integrierter Schaltkreise realisiert. Dabei können die beiden Regelungseinheiten 6 und 7 sowohl als Schaltkreise auf getrennten Chips als auch als Schaltkreise auf einem gemeinsamen Chip umgesetzt werden.

## Patentansprüche

1. Schaltnetzteil mit einem Transformator (5) mit einer Primärwicklung, zu der ein erstes Schaltelement (S1) in Reihe liegt, und einer Sekundärwicklung, zu der ein zweites Schaltelement (S2) in Reihe liegt, wobei sich im Betrieb des Schaltnetzteils erste Zeitabschnitte (A), in denen ein Primärstrom (I1) durch die Primärwicklung fließt, mit zweiten Zeitabschnitten (B), in denen ein Sekundärstrom (I2) durch die Sekundärwicklung fließt, abwechseln und wobei eine sekundärseitige Regelungseinheit (7) zur Regelung der Ausgangsspannung (U2) oder des Ausgangsstroms des Schaltnetzteils durch Anpassung des Rückflusses eines Teils der vom Transformator (5) in Richtung des Schaltnetzteilausgangs gelieferten Energiemenge in den zweiten Zeitabschnitten (B) zurück in den Transformator (5) vorgesehen ist,
**dadurch gekennzeichnet,**
**dass** eine primärseitige Regelungseinheit (6) vorgesehen ist, die zur Regelung der vom Transformator (5) in den ersten Zeitabschnitten (A) jeweils in Richtung des Schaltnetzteileingangs abgegebenen Energie auf einen vorgebbaren Wert dient,
wobei als der Regelung durch die primärseitige Regelungseinheit (6) zugrundeliegende Sollgröße ein vorgebbarer Zeitraum zwischen dem Beginn der ersten Zeitabschnitte (t0) und dem jeweils nächsten folgenden Nulldurchgang des Primärstroms (t1) vorgesehen ist.

2. Schaltnetzteil nach Anspruch 1,
**dadurch gekennzeichnet,**
**daß** als der Regelung durch die primärseitige Regelungseinheit (6) zugrundeliegende Sollgröße ein vorgebbarer jeweils zu Beginn der ersten Zeitabschnitte vorliegender Primärstromwert (I1ₘᵢₙ) vorgesehen ist.

3. Schaltnetzteil nach einem der Ansprüche 1 bis 2,
**dadurch gekennzeichnet,**
**daß** die primärseitige Regelungseinheit (6) zur Anpassung der Ausschaltzeitpunkte (t2) des ersten Schaltelements (S1) durch Anpassung eines von der Ausgangsleistung des Schaltnetzteils abhängigen Primärstromwerts (I1ₘₐₓ) am Ende (t2) der ersten Zeitabschnitte (A) vorgesehen ist.

4. Schaltnetzteil nach einem der Ansprüche 1 bis 2,
**dadurch gekennzeichnet,**
**daß** die primärseitige Regelungseinheit (6) zur Anpassung der Ausschaltzeitpunkte (t2) des ersten Schaltelements (S1) durch Anpassung der von der Ausgangsleistung des Schaltnetzteils abhängigen Länge der ersten Zeitabschnitte (A) vorgesehen ist.

5. Schaltnetzteil nach einem der Ansprüche 1 bis 4,
**dadurch gekennzeichnet,**
**daß** die sekundärseitige Regelungseinheit (7) Mittel (14) zur Bildung eines ersten Vergleichswertes (1·(|U2| - Ref2)) aus der Differenz zwischen der Ausgangsspannung (U2)/dem Ausgangsstrom des Schaltnetzteils und einer Sollgröße (Ref2) für die Ausgangsspannung (U2)/den Ausgangsstrom aufweist und
**daß** Mittel zur Bildung eines aus dem Wert des Sekundärstroms abgeleiteten zweiten Vergleichswertes (I2_{d}) vorgesehen sind und
**daß** ein Ausschalten des zweiten Schaltelements (S2) vorgesehen ist, wenn der zweite Vergleichswert (I2_{d}) den Wert des ersten Vergleichswertes (1·(|U2| - Ref2)) erreicht.

6. Schaltnetzteil nach einem der Ansprüche 1 bis 4,
**dadurch gekennzeichnet,**
**daß** die sekundärseitige Regelungseinheit (7) Mittel (14) zur Bildung eines ersten Vergleichswertes (1·(|U2| - Ref2)) aus der Differenz zwischen der Ausgangsspannung (U2)/dem Ausgangsstrom des Schaltnetzteils und einer Sollgröße (Ref2) für die Ausgangsspannung(U2)/den Ausgangsstrom aufweist und
**daß** Mittel (22) zur Bildung eines aus der seit dem Nulldurchgang (t3) des Sekundärstroms (I2) vergangenen Zeit innerhalb eines zweiten Zeitabschnitts (B) abgeleiteten zweiten Vergleichswertes vorgesehen sind und
**daß** ein Ausschalten des zweiten Schaltelements (S2) vorgesehen ist, wenn der zweite Vergleichswert den Wert des ersten Vergleichswertes (I·(|U2| - Ref2)) erreicht.

7. Schaltungsanordnung, insbesondere integrierter Schaltkreis, mit der primärseitigen Regelungseinheit (6) und/oder der sekundärseitigen Regelungseinheit (7) für das Schaltnetzteil nach einem der Ansprüche 1 bis 7.

## Claims

1. A switched mode power supply comprising a transformer (5) having a primary winding to which a first switching device (S1) is connected in series, and a secondary winding to which a second switching device (S2) is connected in series, in which switched mode power supply, when in operation, first time slots (A) with a primary current (I1) flowing through the primary winding alternate with second time slots (B) with a secondary current (12) flowing through the secondary winding and in which a secondary-side control unit (7) is provided for controlling the output voltage (U2) or the output current of the switched mode power supply by adaptation of the return of part of the energy supplied by the transformer (5) in the direction of the output of the switched mode power supply back into the transformer (5) in the second time slots (B), **characterized in that** a primary-side control unit (6) is provided which is used for controlling the energy supplied by the transformer (5) in the direction of the input to the switched mode power supply in the first time slots (A) to a predefinable value, while a predefinable time space between the beginning of the first time slots (t0) and the respective next zero crossing of the primary current (t1) is provided as the setting value on which the control by the primary-side control unit (6) is based.

2. A switched mode power supply as claimed in claim 1, **characterized in that** a setting value used as a basis for the control by the primary-side control unit (6) is a predefinable primary current value (I1ₘᵢₙ) present at the start of each first time slot.

3. A switched mode power supply as claimed in one of the claims 1 to 2, **characterized in that** the primary-side control unit (6) is used for adapting the switch-off instants (t2) of the first switching device (S1) by adaptation of a primary current value (I1ₘₐₓ) that depends on the output power of the switched mode power supply at the end (t2) of the first time slots (A).

4. A switched mode power supply as claimed in one of the claims 1 to 2, **characterized in that** the primary-side control unit (6) is used for adapting the switch-off instants (t2) of the first switching device (S2) by adaptation of the length of the first time slots (A) which depends on the output power of the switched mode power supply.

5. A switched mode power supply as claimed in any one of the claims 1 to 4, **characterized in that** the secondary-side control unit (7) comprises means (14) for forming a first reference value (1•(|U2| - Ref2)) from the difference between the output voltage/current (U2) of the switched mode power supply and a setting value (Ref2) for the output voltage/current (U2) and **in that** means for forming a second reference value (I2_{d}) derived from the value of the secondary current are provided and **in that** the second switching device (S2) is switched off when the second reference value (I2_{d}) reaches the value of the first reference value (1•(|U2| - Ref2).

6. A switched mode power supply as claimed in any one of the claims 1 to 4, **characterized in that** the secondary-side control unit (7) comprises means (14) for forming a first reference value (1•(|U2| -Ref2)) from the difference between the output voltage/current (U2) of the switched mode power supply and a setting value (Ref2) for the output voltage/current (U2) and **in that** means (22) for forming a second reference value derived from the time elapsed since the zero crossing (t3) of the secondary current (I2) within a second time slot (B) are provided and **in that** the second switching device (S2) is switched off when the second reference value reaches the first reference value (1•(|U2| - Ref2).

7. A circuit arrangement, more particularly, an integrated circuit with the primary-side control unit (6) and/or the secondary-side control unit (7) for the switched mode power supply as claimed in any one of the claims 1 to 7.

## Revendications

1. Alimentation à découpage avec un transformateur (5) doté d'un enroulement primaire en série duquel est monté un premier élément de commutation (S1) et un enroulement secondaire en série duquel est monté un deuxième élément de commutation (S2), des premiers segments temporels (A) dans lesquels un courant primaire (I1) circule par l'enroulement primaire aiternant avec des deuxièmes segments temporels (B) dans lesquels un courant secondaire (I2) circule par l'enroulement secondaire lorsque l'alimentation est en service et une unité de réglage (7) côté secondaire étant prévue pour le réglage de la tension de sortie (U2) ou du courant de sortie de l'alimentation à découpage par adaptation du reflux d'une partie de la quantité d'énergie délivrée par le transformateur (5) dans la direction de la sortie de l'alimentation à découpage dans les deuxièmes segments temporels (B) vers le transformateur (5),
**caractérisée en ce**
**qu'**il est prévu une unité de réglage (6) côté primaire qui sert au réglage à une valeur à déterminer préalablement de l'énergie délivrée pour le réglage de l'énergie délivrée par le transformateur (5) dans les premiers segments temporels (A) respectivement dans la direction de l'entrée de l'alimentation à découpage,
un intervalle à déterminer préalablement entre le début des premiers segments temporels (t0) et le passage à zéro respectivement suivant du courant primaire (t1) étant prévu comme valeur de consigne à la base du réglage par l'unité de réglage (6) côté primaire.

2. Alimentation à découpage selon la revendication 1,
**caractérisée en ce**
**qu'**il est prévu une valeur de courant primaire (I1ₘᵢₙ) à déterminer préalablement présente respectivement au début des premiers segments temporels comme valeur de consigne à la base du réglage par l'unité de réglage (6) côté primaire.

3. Alimentation à découpage selon les revendications 1 à 2,
**caractérisée en ce**
**que** l'unité de réglage (6) côté primaire est prévue pour l'adaptation des moments de désactivation (t2) du premier élément de commutation (S1) par adaptation d'une valeur de courant primaire (I1ₘₐₓ) dépendant de la puissance de sortie de l'alimentation à découpage à la fin (t2) des premiers segments temporels (A).

4. Alimentation à découpage selon l'une des revendications 1 à 2,
**caractérisée en ce**
**que** l'unité de réglage (6) côté primaire est prévue pour l'adaptation des moments de désactivation (t2) du premier élément de commutation (S1) par adaptation de la longueur des premiers segments temporels (A) dépendant de la puissance de sortie de l'alimentation à découpage.

5. Alimentation à découpage selon l'une des revendications 1 à 4,
**caractérisée en ce**
**que** l'unité de réglage (7) côté secondaire contient des moyens (14) pour la formation d'une première valeur de comparaison (I·(|U2| - Ref2)) à partir de la différence entre la tension de sortie (U2)/ le courant de sortie de l'alimentation à découpage et une grandeur de consigne (Ref2) pour la tension de sortie (U2)/le courant de sortie et
**que** des moyens sont prévus pour la formation d'une deuxième valeur de comparaison (I2_{d}) dérivée de la valeur du courant secondaire et
**qu'**une désactivation du deuxième élément de commutation (S2) est prévue lorsque la deuxième valeur de comparaison (I2_{d}) atteint la valeur de la première valeur de comparaison (I·(|U2| - Ref2)).

6. Alimentation à découpage selon l'une des revendications 1 à 4,
**caractérisée en ce**
**que** l'unité de réglage (7) côté secondaire présente des moyens (14) pour la formation d'une première valeur de comparaison (I·(|U2| - Ref2)) à partir de la différence entre la tension de sortie (U2)/le courant de sortie de l'alimentation à découpage et une grandeur de consigne (Ref2) pour la tension de sortie (U2)/le courant de sortie et
**que** des moyens (22) sont prévus pour la formation d'une deuxième valeur de comparaison déduite du temps écoulé depuis le passage à zéro (t3) du courant secondaire (12) dans un deuxième segment temporel (B) et
**qu'**une désactivation du deuxième élément commutateur (S2) est prévue lorsque la deuxième valeur de comparaison atteint la valeur de la première valeur de comparaison (I·(|U2| - Ref2)).

7. Circuit, en particulier circuit intégré, avec l'unité de réglage côté primaire (6) et/ou l'unité de réglage (7) côté secondaire pour l'alimentation à découpage selon l'une des revendications 1 à 7.
